# EUROPÄISCHE PATENTSCHRIFT

(11) **EP 0 793 626 B1**
(45) Veröffentlichungstag und Bekanntmachung des Hinweises auf die Patenterteilung: **19.05.1999**
(21) Anmeldenummer: 95940230.6
(22) Anmeldetag: 22.11.1995
(51) Int. Cl.: C04B 14/06, C04B 33/13

(54) **AEROGELHALTIGES VERBUNDMATERIAL, VERFAHREN ZU SEINER HERSTELLUNG SOWIE SEINE VERWENDUNG**
COMPOSITE MATERIAL CONTAINING AEROGEL, PROCESS FOR MANUFACTURING SAID MATERIAL AND THE USE THEREOF
MATERIAU COMPOSITE CONTENANT UN AEROGEL, SON PROCEDE DE FABRICATION ET SON UTILISATION

(30) Priorität: 23.11.1994 DE 4441568
(43) Veröffentlichungstag der Anmeldung: 10.09.1997
(73) Patentinhaber: CABOT CORPORATION, Boston, MA 02109 (US)
(72) Erfinder: FRANK, Dierk, D-65719 Hofheim (DE); ZIMMERMANN, Andreas, D-64347 Griesheim (DE); STUHLER, Helmut, Georg, D-90491 Nürnberg (DE)
(74) Vertreter: Luderschmidt, Schüler & Partner GbR
(86) Internationale Anmeldenummer: EP9504600
(87) Internationale Veröffentlichungsnummer: WO9615998

(56) Entgegenhaltungen:
- EP-A- 0 672 635

## Beschreibung

Die Erfindung betrifft ein Verbundmaterial, das 10 bis 95 Vol.-% Aerogel-Partikel und ein Schichtsilikat als anorganisches Matrixmaterial enthält, ein Verfahren zu seiner Herstellung sowie seine Verwendung.

Die meisten nicht porösen, anorganischen Feststoffe weisen eine relativ hohe Wärmeleitfähigkeit auf, da Wärme gut durch den festen Stoff geleitet wird. Um zu geringeren Wärmeleitfähigkeiten zu gelangen, verwendet man daher oft poröse Materialien, z.B. auf der Basis von Vermiculiten. Ein poröser Körper besitzt nur noch ein festes Gerüst, das Wärme gut übertragen kann, während über die Luft in den Poren, verglichen mit dem Festkörper, weniger Wärme übertragen wird.

Poren in einem Feststoff führen jedoch in der Regel zu einer Verschlechterung der mechanischen Stabilität, da Spannungen nur noch über das Gerüst übertragen werden können. Daher weisen auch poröse, aber mechanisch noch stabile Materialien eine relativ hohe Wärmeleitfähigkeit auf.

Für eine Reihe von Anwendungen wäre jedoch eine sehr geringe Wärmeleitfähigkeit in Verbindung mit guter mechanischer Festigkeit, d.h. eine hohe Druck- und Biegefestigkeit, wünschenswert. Zum einen müssen Formkörper bearbeitet werden können, zum anderen müssen sie je nach Anwendung mechanischen Belastungen ohne Bruch oder Bildung von Rissen, auch bei erhöhten Temperaturen, standhalten können.

Aerogele, insbesondere solche mit Porositäten über 60 % und Dichten unter 0,6 g/cm³, weisen aufgrund ihrer sehr geringen Dichte, ihrer hohen Porosität und ihres geringen Porendurchmessers eine äußerst geringe thermische Leitfähigkeit auf und finden deshalb Anwendung als Wärmeisolationsmaterialien, wie zum Beispiel in der EP-A-0 171 722 beschrieben. Die geringen Porendurchmesser, unterhalb der mittleren freien Weglänge von Luftmolekülen, sind für die niedrige Wärmeleitfähigkeit von besonderer Bedeutung, da sie dazu führen, daß die Luft in den Poren eine geringere Wärmeleitfähigkeit besitzt als Luft in Makroporen. Daher ist die Wärmeleitfähigkeit von Aerogelen auch geringer als die anderer Materialien mit ähnlich großer Porosität, aber größeren Porendurchmessern wie z.B. Schäumen oder Materialien auf der Basis von Vermiculiten.

Die hohe Porosität führt aber auch zu einer geringeren mechanischen Stabilität sowohl des Gels, aus dem das Aerogel getrocknet wird, als auch des getrockneten Aerogels selbst.

Auf Grund der geringen Dichte weisen Aerogele, je nach Dichte, außerordentlich geringe Dielektrizitätskonstanten mit Werten zwischen 1 und 2 auf. Aerogele sind daher auch für elektronische Anwendungen, etwa für Hochfrequenzanwendungen prädestiniert (S. C. W. Hrubesh et al., J. Mater. Res. Vol. 8, No. 7, 1736-1741).

Neben den oben beschriebenen mechanischen Nachteilen der Aerogele ist es für elektronische Anwendungen sehr nachteilig, wenn der dielektrische Verlustfaktor groß ist.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes entfernt wird. Wird die Flüssigkeit des Gels dagegen unterkritisch, beispielsweise unter Bildung einer Flüssig-Dampf-Grenzphase entfernt, dann bezeichnet man das entstandene Gel vielfach auch als Xerogel. Es ist anzumerken, daß es sich bei den erfindungsgemäßen Gelen um Aerogele, im Sinne von Gel mit Luft als Dispersionsmittel handelt.

Für viele Anwendungen ist es notwendig, die Aerogele in Formkörpern mit hinreichender mechanischer Stabilität einzusetzen.

In der EP-A-0 340 707 wird ein Dämmstoff der Dichte 0,1 bis 0,4 g/cm³ offenbart, der aus mindestens 50 Vol.-% Silica-Aerogel-Partikeln mit einem Durchmesser zwischen 0,5 und 5 mm besteht, die mittels mindestens einem organischen und/oder anorganischen Bindemittel miteinander verbunden sind. Die relativ grobe Körnung bewirkt, daß aus dem Dämmstoff hergestellte Formkörper eine inhomogene Verteilung des Aerogelmaterials aufweisen. Dies gilt insbesondere, wenn die kleinsten typischen Dimensionen der Formkörper, bei Folien oder Platten die Dicke, nicht sehr viel größer als der typische Aerogel-Partikel-Durchmesser sind. Vor allem in den Randbereichen würde ein erhöhter Bindemittelanteil benötigt, der sich dann negativ auf die thermische Leitfähigkeit und die dielektrischen Eigenschaften des Formkörpers besonders an der Oberfläche auswirken würde.

Insbesondere für elektronische Anwendungen werden besonders dünne Schichten (0,01 bis 2,0 mm) benötigt, die mittels den oben beschriebenen Aerogel-Partikeln nicht hergestellt werden können.

Darüber hinaus würden in einem Formkörper aus diesem Dämmstoff an der Oberfläche mechanisch wenig stabile Bereiche aus Aerogelmaterial mit Durchmessern zwischen 0,5 und 5 mm entstehen, die unter mechanischen Belastungen durch Zerstörung der Aerogele an der Oberfläche schließlich zu Oberflächenunebenheiten mit Durchmessern beziehungsweise Tiefen bis zu 5 mm führen könnten.

Weiterhin ist es nicht einfach, solche Dämmstoffe mit nur einem geringen Flüssigkeitsanteil herzustellen, da mit den in der EP-A-0 340 707 angegebenen Verfahren beim Mischen die Aerogelpartikel auf Grund ihrer geringen mechanischen Festigkeit durch Schervorgänge leicht zerstört werden können.

In der nicht vorveröffentlichten europäischen Patentanmeldung EP-A-0 672 635, die Stand der Technik gemäß Art. 54 (3) EPÜ ist (Prioritätsdatum: 18.03.1994, Veröffentlichungstag: 20.09.1995), werden Formkörper der Dichte 0,1 bis 0,4 g/cm³ offenbart, die Silica-Aerogel-Partikel mit einem mittleren Durchmesser von 0,001 bis 8 mm enthalten, die mittels mindestens einem organischen oder anorganischen Bindemittel miteinander verbunden sind, wobei das Bindemittel Schichtsilikate und/oder Tonminerale enthält, sowie Verfahren zu ihrer Herstellung.

Aufgabe ist es daher, ein Verbundmaterial auf Basis von Aerogelen bereitzustellen, das eine niedrige Wärmeleitfähigkeit und eine hohe mechanische Festigkeit aufweist.

Eine weitere Aufgabe der vorliegenden Erfindung ist es, ein Verbundmaterial zur Verfügung zu stellen, das eine Dielektrizitätskonstante kleiner als 3 und damit verbunden auch einen geringen dielektrischen Verlustfaktor aufweist.

Gegenstand der vorliegenden Erfindung ist, für die Vertragsstaaten der vorliegenden Anmeldung, die nicht in der EP-A-0 672 635 genannt sind, ein Verbundmaterial das 10 bis 95 Vol.-% Aerogel-Partikel und mindestens ein anorganisches Matrixmaterial enthält, wobei der Teilchendurchmesser der Aerogel-Partikel kleiner als 0,5 mm ist und die Aerogel-Partikel als hydrophobe Oberflächengruppen trisubstituierte Silylgruppen aufweisen, wobei das anorganische Matrixmaterial ein Schichtsilikat ist und wobei das Verbundmaterial noch bis zu 50 Gew.-% anorganische Bindemittel, bezogen auf den Anteil Schichtsilikat, enthalten kann. Das Schichtsilikat kann dabei ungebrannt und/oder gebrannt sein.

Das oder die Matrixmaterialien bilden eine Matrix, die die Aerogelteilchen verbindet und sich als durchgehende Phase durch das gesamte Verbundmaterial zieht.

Als Schichtsilikate können natürlich vorkommende Schichtsilikate wie Kaoline, Tone oder Bentonite, synthetische Schichtsilikate, wie Magadiit oder Keniait oder Gemische derselben verwendet werden.

Bevorzugt werden solche Schichtsilikate verwendet, die möglichst wenig Alkalien und gleichzeitig eine hohe Bildsamkeit aufweisen. Besonders bevorzugt werden entsprechende Tone oder synthetische, alkalifreie (natriumfreie) Schichtsilikate, wie z.B. Magadiit, verwendet.

Je nach Anwendung kann es vorteilhaft sein, daß das Verbundmaterial bzw. die Schichtsilikate darin, gebrannt werden. Die Brenntemperatur wird so gewählt, daß das Kristallwasser ausgetrieben ist (T > 550°C). Das Zweischichtsilikat Kaolin wird in diesem Fall beispielsweise in Metakaolin überführt. Dabei stellt sich eine Porosität ein, die für Anwendungen als thermischer Isolator gewünscht ist.

Darüber hinaus kann das Verbundmaterial noch anorganische Bindemittel, wie z.B. Gips, Kalk und/oder Zement enthalten, wobei der Anteil der anorganischen Bindemittel, bezogen auf den Anteil Schichtsilikat vorzugsweise weniger als 50 Gew.-% beträgt.

Die anorganischen Bindemittel, wie zum Beispiel Zement, Kalk, Gips oder geeignete Mischungen daraus, bieten in Kombination mit Schichtsilikaten eine ausgezeichnete Grundlage für die Herstellung von Formkörpern aus Aerogel. Bei der hydraulischen Bindung entsteht ein sehr feines Gefüge, das eine hohe Festigkeit mit sich bringt. Die Kombination Schichtsilikat, anorganische Bindemittel und Aerogel verleiht dem Formkörper Eigenschaften, die für Anwendungen z.B. im Baubereich gerade gewünscht werden.

Mischungen aus Schichtsilikaten und anorganischen Bindemitteln eignen sich auch zum Gießen. Die Schichtsilikate regeln die rheologischen Eigenschaften solcher wässrigen Ansätze.

Bei einem Gehalt an Aerogel-Partikel, der signifikant unter 10 Vol.-% in der Zusammensetzung liegt, würden aufgrund des niedrigen Anteils der Aerogel-Partikel, in der Zusammensetzung die positiven Eigenschaften in hohem Maße verloren gehen. Eine solche Zusammensetzung würde nicht mehr niedrige Dichten und Wärmeleitfähigkeiten aufweisen. Die Dielektrizitätskonstante würde auf Werte ansteigen, wodurch die Formkörper beispielsweise für Hochfrequenz-Anwendungen ungeeignet wären.

Ein Gehalt an Aerogel-Partikel, der signifikant über 95 Vol.-% liegt, würde zu einem Gehalt an Matrixmaterial von unter 5 Vol.-% führen. In diesem Fall wäre dessen Anteil zu niedrig, um eine ausreichende Verbindung der Aerogel-Partikel untereinander sowie mechanische Druck- und Biegefestigkeit zu gewährleisten.

Vorzugsweise liegt der Anteil der Aerogel-Partikel im Bereich von 20 bis 90 Vol.-%.

Geeignete Aerogele für das erfindungsgemäße Verbundmaterial sind solche auf Basis von Metalloxiden, die für die Sol-Gel-Technik geeignet sind (C.J. Brinker, G.W. Scherer, Sol-Gel-Science, 1990, Kap. 2 und 3), wie beispielsweise Si- oder Al-Verbindungen oder solche auf der Basis organischer Stoffe, die für die Sol-Gel-Technik geeignet sind, wie Melaminformaldehydkondensate (US-A-5 086 085) oder Resorcinformaldehydkondensate (US-A-4 873 218). Sie können auch auf Mischungen der obengenannten Materialien basieren. Bevorzugt verwendet werden Aerogele, enthaltend Si-Verbindungen, insbesondere SiO₂-Aerogele und ganz besonders bevorzugt SiO₂-Xerogele. Zur Reduktion des Strahlungsbeitrags der Wärmeleitfähigkeit kann das Aerogel IR-Trübungsmittel, wie z.B. Ruß, Titandioxid, Eisenoxide oder Zirkondioxid sowie Mischungen derselben enthalten.

In einer bevorzugten Ausführungsform weisen die Aerogel-Partikel hydrophobe Oberflächengruppen auf. Geeignete Gruppen zur dauerhaften Hydrophobisierung sind trisubstituierte Silylgruppen der allgemeinen Formel -Si(R)₃, vorzugsweise Trialkyl- und/oder Triarylsilylgruppen, wobei jedes R unabhängig ein nicht reaktiver, organischer Rest wie C₁-C₁₈ -Alkyl oder C₆-C₁₄-Aryl, vorzugsweise C₁-C₆-Alkyl oder Phenyl, insbesondere Methyl, Ethyl, Cyclohexyl oder Phenyl ist, der zusätzlich noch mit funktionellen Gruppen substituiert sein kann. Besonders vorteilhaft zur dauerhaften Hydrophobisierung des Aerogels ist die Verwendung von Trimethylsilylgruppen. Die Einbringung dieser Gruppen kann, wie in der WO 94/25149 beschrieben, erfolgen, oder durch Gasphasenreaktion zwischen dem Aerogel und beispielsweise einem aktivierten Trialkylsilanderivat, wie z.B. einem Chlortrialkylsilan oder einem Hexaalkyldisilazan (vergleiche R. Iler, The Chemistry of Silica, Wiley & Sons, 1979), geschehen. Verglichen mit OH-Gruppen, vermindern die so hergestellten hydrophoben Oberflächengruppen weiterhin den dielektrischen Verlustfaktor und die Dielektrizitätskonstante. Aerogel-Partikel mit hydrophilen Oberflächengruppen können je nach Luftfeuchtigkeit Wasser adsorbieren, was dazu führt, daß Dielektrizitätskonstante und dielektrischer Verlustfaktor mit der Luftfeuchtigkeit variieren können. Dies ist für elektronische Anwendungen oft nicht erwünscht. Die Verwendung von Aerogel-Partikeln mit hydrophoben Oberflächengruppen verhindert diese Variation, da kein Wasser adsorbiert wird.

Die Auswahl der Reste richtet sich außerdem nach der typischen Anwendungstemperatur.

Erfindungsgemäß ist der Teilchendurchmesser der Aerogel-Partikel kleiner als 0,5 mm, bevorzugt kleiner als 0,2 mm. Für elektronische Anwendungen kann der Durchmesser noch wesentlich kleiner, jedoch vorzugsweise größer 0,1 µm, sein. Der Teilchendurchmesser bezieht sich auf den mittleren Durchmesser des einzelnen Aerogel-Teilchens, da die Aerogel-Teilchen herstellungsbedingt, beispielsweise durch Mahlen, nicht notwendigerweise eine sphärische Form aufweisen müssen.

Die Verwendung kleiner Aerogel-Partikel bei gleichem Aerogelanteil führt zu verbesserter mechanischer Stabilität gegenüber Bruch- und Rißbildung, da sich unter Belastung lokal keine so großen Spannungen aufbauen können.

Ferner führen kleine Aerogel-Partikel auch zu einer homogeneren Verteilung in der Zusammensetzung, was dazu führt, daß das Verbundmaterial an allen Stellen, insbesondere auch an den Oberflächen, eine nahezu einheitliche Wärmeleitfähigkeit und Dielektrizitätskonstante aufweist.

Aerogele können je nach Material und nach dem Typ von Oberflächengruppen auf den Porenoberflächen hydrophil oder hydrophob sein. Kommen hydrophile Aerogele mit polaren Stoffen, insbesondere Wasser, in Form ihres Dampfes oder als Flüssigkeit in Berührung, kann je nach Dauer der Einwirkung und dem Aggregatzustand des Stoffes die Porenstruktur angegriffen werden; in ungünstigen Fällen kann ein hydrophiles Aerogel sogar kollabieren. Diese Veränderung der Porenstruktur, insbesondere ein Kollaps, führt dann unter Umständen zu einer drastischen Verschlechterung der Wärmeisolationswirkung. Im Hinblick auf das mögliche Vorhandensein von Feuchtigkeit (durch Wasser) im Verbundmaterial, z.B. durch Kondensation von Feuchtigkeit bei Temperaturwechsel, sowie die Herstellung, bei der typerischerweise Wasser verwendet wird, werden daher vorzugsweise hydrophobe Aerogele verwendet. Besonders bevorzugt sind solche Aerogele, die auch über lange Zeiten und auch in leicht saurem Milieu hydrophob bleiben, um eine Verschlechterung der Isolationswirkung des Verbundmaterials durch Feuchtigkeit und/oder den Einfluß der Umgebungsluft über die für typische, aus dem Verbundmaterial hergestellte Formteile zu erwartende lange Lebensdauer zu garantieren.

Werden Aerogel-Partikel mit hydrophoben Oberflächengruppen verwendet, erhält man bei Verwendung sehr kleiner Teilchendurchmesser eine hydrophobe Keramik, da das hydrophobe Aerogel homogen und sehr fein verteilt vorliegt.

Ein besonders hoher Anteil von Aerogel-Partikeln in dem Verbundmaterial läßt sich durch Verwendung einer bimodalen Verteilung der Korngrößen erreichen.

Darüber hinaus gilt, daß die thermische Leitfähigkeit der Aerogele mit zunehmender Porosität und abnehmender Dichte abnimmt. Bevorzugt sind deshalb Aerogele mit Porositäten über 60 % und Dichten unter 0,6 g/cm³. Besonders bevorzugt sind Aerogele mit Dichten unter 0,4 g/cm³.

Zur Reduktion des Strahlungsbeitrags der Wärmeleitfähigkeit kann das Verbundmaterial IR-Trübungsmittel, wie z.B. Ruß, Titandioxid, Eisenoxide oder Zirkondioxid sowie Mischungen derselben enthalten, was besonders für Anwendungen bei hohen Temperaturen vorteilhaft ist.

Im Hinblick auf Rißbildung und Bruchfestigkeit kann es weiterhin vorteilhaft sein, wenn in dem Verbundmaterial Fasern enthalten sind. Als Fasermaterial können organische Fasern wie zum Beispiel Polypropylen-, Polyester-, Nylon- oder Melaminformaldehydfasern und/oder anorganische Fasern, wie zum Beispiel Glasfasern, Mineral- oder SiC-Fasern, und/oder Kohlenstoffasern verwendet werden. Wird der Formkörper ausgeglüht, können organische Fasern nicht verwendet werden.

Die Brandklasse des nach der Trocknung erhaltenen Verbundmaterials wird durch die Brandklasse des Aerogels und des anorganischen Matrixmaterials sowie gegebenenfalls die des Fasermaterials bestimmt. Um eine möglichst günstige Brandklasse des Verbundmaterials zu erhalten (schwer entflammbar oder unbrennbar), sollten die Fasern aus nichtbrennbarem Material, z.B. Mineral-, Glas- oder SiC-Fasern, bestehen.

Um eine Erhöhung der Wärmeleitfähigkeit durch die zugegebenen Fasern zu vermeiden, sollte
a) der Volumenanteil der Fasern 0,1 bis 30 %, vorzugsweise 1 bis 10 % betragen, und
b) die Wärmeleitfähigkeit des Fasermaterials vorzugsweise <1 W/mK,
sein.

Durch geeignete Wahl von Faserdurchmesser und/oder -material kann der Strahlungsbeitrag zur Wärmeleitfähigkeit reduziert und eine größere mechanische Festigkeit erzielt werden. Dazu sollte der Faserdurchmesser vorzugsweise im Bereich von 0,1 bis 30 µm liegen.

Der Strahlungsbeitrag zur Wärmeleitfähigkeit kann besonders reduziert werden, wenn Kohlenstoffasern oder kohlenstoffhaltige Fasern verwendet werden.

Die mechanische Festigkeit kann weiter durch Länge und Verteilung der Fasern im Verbundmaterial beeinflußt werden. Bevorzugt werden Fasern eingesetzt, deren Länge zwischen 0,5 und 10 cm liegt. Für plattenförmige Formkörper können auch Gewebe aus Fasern verwendet werden.

Außerdem kann das Verbundmaterial weitere Hilfsstoffe, wie zum Beispiel Tylose, Stärke, Polyvinylalkohol und/oder Wachsemulsionen enthalten. Diese Stoffe werden bei der Herstellung des Verbundmaterials als Extrudierhilfsmittel verwendet. Sie werden im Stand der Technik großtechnisch bei der Formgebung von keramischen Massen eingesetzt.

Die Dielektrizitätskonstante des Verbundmaterials sollte insbesondere für elektronische Anwendungen vorzugsweise kleiner als 3 sein. Damit eignet sich ein solches Verbundmaterial für Anwendungen im Frequenzbereich oberhalb 1GHz, da die Kapazität des Verbundwerkstoffes vernachlässigbar klein bleibt.

Wird das Material in Form von flächigen Gebilden, wie z.B. Platten verwendet, kann es auf mindestens einer Seite mit mindestens einer Deckschicht kaschiert sein, um die Eigenschaften der Oberfläche zu verbessern, so z.B. die Robustheit zu erhöhen, sie als Dampfsperre auszubilden oder gegen leichte Verschmutzbarkeit zu schützen. Die Deckschichten können auch die mechanische Stabilität des Verbundstoff-Formteils verbessern. Werden auf beiden Flächen Deckschichten verwendet, so können diese gleich oder verschieden sein.

Als Deckschichten eignen sich alle dem Fachmann bekannten Materialien. Sie können nicht-porös sein und damit als Dampfsperre wirken, wie z.B. Kunststoffolien, Metallfolien oder metallisierte Kunststoffolien, die Wärmestrahlung reflektieren. Es können aber auch poröse Deckschichten verwendet werden, die ein Eindringen von Luft in das Material ermöglichen und damit zu einer besseren Schalldämpfung führen, wie z.B. poröse Folien, Papiere, Gewebe oder Vliese. Auch das Matrixmaterial selbst kann als Deckschicht verwendet werden.

Die Deckschichten können selbst auch aus mehreren Schichten bestehen. Die Deckschichten können mit dem Bindemittel befestigt sein, es kann aber auch ein anderer Kleber Verwendung finden.

Die Oberfläche des Verbundmaterials kann auch durch Einbringen mindestens eines geeigneten Materials in eine Oberflächenschicht geschlossen und verfestigt werden.

Eine weitere Aufgabe der vorliegenden Erfindung ist es, ein Verfahren zur Herstellung des erfindungsgemäßen Verbundmaterials zur Verfügung zu stellen.

Diese Aufgabe wird durch ein Verfahren gelöst, bei dem man
a) die Aerogel-Partikel, das Schichtsilikat, das Wasser sowie gegebenenfalls Fasern, Binde- und/oder Hilfsmittel in einer Mischvorrichtung mischt,
b) die erhaltene Mischung einer Formgebung unterwirft,
c) die erhaltene Form trocknet,
d) die getrocknete Form gegebenenfalls einer Weißbearbeitung unterzieht, und
e) die bearbeitete bzw. getrocknete Form gegebenenfalls einer Wärmebehandlung bei einer Temperatur im Bereich von 250 bis 1200°C unterwirft.

Vorzugsweise werden in Schritt a) in der Mischvorrichtung zuerst die festen Bestandteile vorgelegt und dann die flüssigen Bestandteile hinzugegeben.

Besonders bevorzugt wird auf die trockene Einwaage der festen Bestandteile eine Wachsemulsion mit einem Anteil von ca. 50 % Wasser gegeben. Ein weiterer Teil der notwendigen Feuchte kann über die Zugabe von Wasserglas erreicht werden. Soweit erforderlich, wird zu dem Ansatz noch Wasser hinzugegeben.

Durch den Gehalt an Anmachwasser können die mechanischen Eigenschaften des Ansatzes verändert werden. Auch die Art, Menge und Kombination der Fasern, Binde- und/oder Hilfsmittel bestimmt in Wechselwirkung mit den Eigenschaften der Aerogel-Partikel und des Schichtsilikates das charakteristische, rheologische Verhalten des Ansatzes.

Dieser Ansatz wird vorzugsweise in einem Mischer geknetet, der auf den Ansatz scherende Kräfte ausübt. Die Scherkräfte sollen die Schichtsilikate möglichst vollständig in einzelne Plättchen aufschließen.

Bei der anschließenden Formgebung, die vorzugsweise mittels eines Extrusionsprozesses durchgeführt wird, ist es dann möglich, durch die Scherkräfte und die dazu senkrecht wirkenden Formgebungskräfte die Plättchen der Schichtsilikate einzuregeln. Diese Textur steigert die mechanische Festigkeit. Für die Anwendung als Wärmedämmstoff ist sie zur Senkung der Wärmeleitfähigkeit hilfreich. Außerdem wird der Bedarf an Schichtsilikat relativ niedriger, um gleiche physikalische Eigenschaften zu erzielen.

In manchen Fällen ist eine zu starke Texturierung unerwünscht. Durch teilweisen oder vollständigen Ersatz von ungebrannten Schichtsilikaten durch kalzinierte Schichtsilikate kann einer Texturierung entgegengewirkt werden.

Schichtsilikate können wegen ihrer plastischen Eigenschaften durch Zugabe von Wasser so eingestellt werden, daß sie extrudierfähig sind. Der Wassergehalt ist so einzustellen, daß eine gute Formbarkeit des Ansatzes gewährleistet ist. Je nach dem Wasseraufnahmevermögen des Aerogels muß der Wassergehalt erhöht werden.

Die Formgebung kann aber auch mit anderen, dem Fachmann bekannten Verfahren durchgeführt werden. So kann der Ansatz, wenn er vorzugsweise eine Viskosität im Bereich von 100 bis 2000 mPas aufweist, auch in eine Form gegossen werden.

Der nach der Formgebung erhaltene Körper wird getrocknet und anschließend gegebenenfalls einer Weißbearbeitung unterzogen, d.h. er wird auf das gewünschte Maß zurechtgeschnitten.

Je nach Anwendung kann der getrocknete Körper einer Wärmebehandlung, d.h. einem Glühbrand oder einer Kalzination unterworfen werden. Durch den Glühbrand ist es möglich, die Extrudierhilfsmittel aus dem Werkstoff zu entfernen. Vorzugsweise liegt die Temperatur beim Glühbrand im Bereich von 500 bis 1000°C.

Die Festigkeit nach dem Glühbrand, bei dem vorzugsweise eine Temperatur von 1000°C nicht überschritten werden sollte, um die Struktur des Aerogels nicht zu vernichten, ist trotz des hohen Gehaltes an Aerogel immer noch groß genug, um es für weitere Arbeitsschritte oder für die Anwendung zu handhaben.

Die erfindungsgemäßen Verbundmaterialien eignen sich auf Grund ihrer geringen Wärmeleitfähigkeit als Formkörper zur Wärmedämmung. Enthält der fertige Formkörper keine organischen Bestandteile, kann er zur Wärmedämmung bei Temperaturen auch über ca. 500°C verwendet werden. Der Körper kann je nach Anwendung in Form von Platten, Leisten oder unregelmäßig geformten Körpern ausgeführt werden.

Die erfindungsgemäßen Verbundmaterialien bewähren sich darüber hinaus auch als Formkörper oder Beschichtungen für Anwendungen im Elektronikbereich, vorzugsweise bei Frequenzen > 1 MHz. Mit steigendem Aerogelanteil hat der Formkörper eine fallende Dielektrizitätskonstante und kann als Substrat für GHz-Schaltungen verwendet werden. Dies ermöglicht hohe Integrationsdichten der Schaltungen, weil die Dielektrizitätskonstante klein ist. Für die Anwendung im Elektronikbereich werden bevorzugt solche Verbundmaterialien verwendet, die lediglich Schichtsilikate und höchstens einen geringen Anteil anorganischer Bindemittel aufweisen, denn solche Bindemittel auf der Basis von Zement, Kalk und/oder Gips erhöhen die Dielektrizitätskonstante viel stärker als Schichtsilikate. Besonders vorteilhaft ist die Verwendung von synthetischen Schichtsilikaten, wie zum Beispiel Magadiit oder Keniait, weil diese so hergestellt werden können, daß sie keine Alkalien enthalten.

Die Erfindung wird im folgenden anhand von Ausführungsbeispielen näher beschrieben, wobei in allen Versuchen ein hydrophobes Aerogel auf der Basis von Tetraethylorthosilikat (TEOS), mit einer Dichte von 0,17 g/cm³ und einer Wärmeleitfähigkeit von 30 mW/mK eingesetzt wurde, das analog dem in der WO 94/25149 offenbarten Verfahren unter Verwendung von Trimethylchlorsilan hergestellt wurde.

### Beispiel 1

In einem Mischer werden die folgenden Komponenten trocken gemischt:
500 ml Aerogel mit einer Korngröße < 0,1 mm
450 g SAVC-Ton (R3 der AGS-Mineralien)
50 g Bentonit G 100
20 g Tylose FL 6000 x

Es wird solange gemischt, bis die Mischung homogen erscheint, das heißt, daß mit bloßem Auge keine Differenzierung der einzelnen Bestandteile wahrgenommen werden kann. Dann wird die Mischung mit folgenden Flüssigkeiten angefeuchtet:
225 ml Wasser
25 ml MobilcerX
25 ml Baykiesol

Die fertige Mischung wird zunächst entlüftet und mit dem Extruder zu Formlingen gepreßt. Die Formlinge werden getrocknet und anschließend einer Temperaturbehandlung bei 500°C unterzogen, um die organischen Bestandteile zu entfernen.

Die erhaltenen Formlinge die das Verbundmaterial bilden, weisen eine Dichte von 0,8 g/cm³ und eine Dielektrizitätskonstante von 2,7 auf.

### Beispiel 2

In einem Mischer werden die folgenden Komponenten trocken gemischt:
1000 ml Aerogel
250 g Bentonit G 100
40 g Tylose FL 6000 x

Es wird solange gemischt, bis die Mischung homogen erscheint, das heißt, daß mit bloßem Auge keine Differenzierung der einzelnen Bestandteile wahrgenommen werden kann. Dann wird die Mischung mit folgenden Flüssigkeiten angefeuchtet:
200 ml Wasser
50 ml MobilcerX
50 ml Baykiesol

Die fertige Mischung wird zunächst entlüftet und mit dem Extruder zu Formlingen gepreßt. Die Formlinge werden getrocknet und anschließend einer Temperaturbehandlung bei 600°C unterzogen, um die organischen Bestandteile zu entfernen.

Die erhaltenen Formlinge weisen eine Dichte von 0,55 g/cm³ auf.

### Beispiel 3

In einem Mischer werden die folgenden Komponenten trocken gemischt:
500 ml Aerogel
450 g Ton MF 35
50 g Bentonit G 100
20 g Tylose FL 6000 x

Es wird solange gemischt, bis die Mischung homogen erscheint, das heißt, daß mit bloßem Auge keine Differenzierung der einzelnen Bestandteile wahrgenommen werden kann. Dann wird die Mischung mit folgenden Flüssigkeiten angefeuchtet:
225 ml Wasser
25 ml MobilcerX
25 ml Baykiesol

Die fertige Mischung wird zunächst entlüftet und mit dem Extruder zu Formlingen gepreßt. Die Formlinge werden getrocknet und anschließend einer Temperaturbehandlung bei 500°C unterzogen, um die organischen Bestandteile zu entfernen.

Die erhaltenen Formlinge weisen eine Dichte von 0,8 g/cm³ auf.

### Beispiel 4

In einem Mischer werden die folgenden Komponenten trocken gemischt:
1000 ml Aerogel
250 g Bentonit G 100
40 g Tylose FL 6000 x

Es wird solange gemischt, bis die Mischung homogen erscheint, das heißt, daß mit bloßem Auge keine Differenzierung der einzelnen Bestandteile wahrgenommen werden kann. Dann wird die Mischung mit folgenden Flüssigkeiten angefeuchtet:
200 ml Wasser
50 ml MobilcerX
50 ml Baykiesol

Die fertige Mischung wird zunächst entlüftet und mit dem Extruder zu Formlingen gepreßt. Die Formlinge werden getrocknet und anschließend einer Temperaturbehandlung bei 630°C unterzogen, um die organischen Bestandteile zu entfernen.

Die erhaltenen Formlinge weisen eine Dichte von 0,55 g/cm³ auf.

### Beispiel 5

1000 ml Aerogel
200 g Calciumsilikat (Portlandit)
20 g Gips α-Halbhydrat
50 g SAVC Ton
40 g Tylose FL 6000 x
275 ml Wasser
werden mit einem Rührwerk in einem Behälter solange gemischt, bis die Mischung homogen erscheint, das heißt, daß mit bloßem Auge keine Differenzierung der einzelnen Bestandteile wahrgenommen werden kann.

Der Ansatz wird in eine Form gegossen und nach 48 Stunden Ruhezeit aus der Form entnommen. Der Formkörper wird einer Trocknung bei 50°C unterzogen um überflüssige Feuchte zu entfernen. Der getrocknete Formkörper weist eine Dichte von 0,65 g/cm³, eine Wärmeleitfähigkeit von 0,25 W/mK (bestimmt nach der Laser-Flash-Methode, mit einem Gerät der Fa. Netzsch), sowie eine Biegefestigkeit (bestimmt nach DIN 40685 bzw. IEC 672; Teil 2) von 35 N/mm² auf.

### Beispiel 6

In einem Mischer werden die folgenden Komponenten trocken gemischt:
500 ml Aerogel
450 g SAVC-Ton
50 g Bentonit G100
50 g Tylose FL6000x

Es wird solange gemischt, bis die Mischung homogen erscheint, das heißt, daß mit bloßem Auge keine Differenzierung der einzelnen Bestandteile wahrgenommen werden kann. Dann wird die Mischung mit folgenden Flüssigkeiten angefeuchtet:
225 ml Wasser
25 ml MobilcerX
25 ml Baykiesol

Die fertige Mischung wird getrocknet und anschließend einer Zerkleinerung in einem Backenbrecher auf <1,5 mm unterzogen. Das erhaltene Pulver wird in zwei Durchgängen in einer Alpine Schlagkreuzmühle mit Vierflügeleinsatz aufgemahlen. Das Pulver hat eine mittlere Korngröße von <0,1 mm.

Dieses Pulver wird in einem Tellergranulator Marke Eirich unter einem Winkel von 40° und einer Drehzahl von 20 U/min aufgranuliert. Zur Granulation wird eine 0,2 %ige Tyloselösung C600 verwendet. Das Granulat wird auf die Korngrößen >0,1 mm und <0,8 mm abgesiebt und mit 2,5 % Feuchte in einer DORST TPA-6 zu Biegebruchstäben von 4,5 x 4,5 x 50 mm und Scheiben mit Durchmesser 50 x 7 mm trockengepreßt.

Die erhaltenen Formlinge haben ein spezifisches Gewicht von 1,0 g/cm³ und eine Wärmeleitfähigkeit von 400 mW/mK und eine Biegebruchfestigkeit von >35 N/mm².

## Patentansprüche (Patentansprüche für folgende(n) Vertragsstaat(en): AT, CH, LI, DK, ES, GR, IE, LU, PT)

1. Verbundmaterial, das 10 bis 95 Vol.-% Aerogel-Partikel und mindestens ein anorganisches Matrixmaterial enthält, dadurch gekennzeichnet, daß der Teilchendurchmesser der Aerogel-Partikel kleiner als 0,5 mm ist und daß das anorganische Matrixmaterial ein Schichtsilikat ist.

2. Verbundmaterial gemäß Anspruch 1, dadurch gekennzeichnet, daß das Schichtsilikat ein natürlich vorkommendes Schichtsilikat ist.

3. Verbundmaterial gemäß Anspruch 1 oder 2, dadurch gekennzeichnet, daß das Verbundmaterial Zement, Kalk und/oder Gips enthält.

4. Verbundmaterial gemäß mindestens einem der Ansprüche 1 bis 3, dadurch gekennzeichnet, daß das Aerogel ein SiO₂-Aerogel ist.

5. Verbundmaterial gemäß mindestens einem der Ansprüche 1 bis 4, dadurch gekennzeichnet, daß die Aerogel-Partikel hydrophobe Oberflächengruppen aufweisen.

6. Verbundmaterial gemäß mindestens einem der Ansprüche 1 bis 5, dadurch gekennzeichnet, daß der Teilchendurchmesser der Aerogel-Partikel kleiner als 0,2 mm ist.

7. Verbundmaterial gemäß mindestens einem der Ansprüche 1 bis 6, dadurch gekennzeichnet, daß die Aerogel-Partikel Porositäten über 60 % und Dichten unter 0,6 g/cm³ aufweisen.

8. Verbundmaterial gemäß mindestens einem der Ansprüche 1 bis 7, dadurch gekennzeichnet, daß das Verbundmaterial 0,1 bis 30 Vol.-% Fasern enthält.

9. Verbundmaterial gemäß mindestens einem der Ansprüche 1 bis 8, dadurch gekennzeichnet, daß das Verbundmaterial zusätzlich noch Hilfsmittel enthält.

10. Verbundmaterial gemäß mindestens einem der Ansprüche 1 bis 9, dadurch gekennzeichnet, daß es eine flächige Form aufweist und auf mindestens einer Seite mit mindestens einer Deckschicht kaschiert ist.

11. Verfahren zur Herstellung eines Verbundmaterials gemäß Anspruch 1, dadurch gekennzeichnet, daß man
a) die Aerogel-Partikel, das Schichtsilikat, das Wasser sowie gegebenenfalls Fasern, Binde- und/oder Hilfsmittel in einer Mischvorrichtung mischt,
b) die erhaltene Mischung einer Formgebung unterwirft,
c) die erhaltene Form trocknet,
d) die getrocknete Form gegebenenfalls einer Weißbearbeitung unterzieht, und
e) die bearbeitete bzw. getrocknete Form gegebenenfalls einer Wärmebehandlung bei einer Temperatur im Bereich von 250 bis 1200°C unterwirft.

12. Verfahren gemäß Anspruch 11, dadurch gekennzeichnet, daß man die Formgebung mittels eines Extrusionsprozesses durchführt.

13. Verfahren gemäß Anspruch 11 oder 12, dadurch gekennzeichnet, daß man die Temperaturbehandlung bei einer Temperatur im Bereich von 500 bis 1000°C durchführt.

14. Verwendung eines Verbundmaterials gemäß mindestens einem der Ansprüche 1 bis 10 zur Wärmedämmung und/oder in der Elektronik.

## Patentansprüche (Patentansprüche für folgende(n) Vertragsstaat(en): BE, DE, FR, GB, IT, NL, SE)

1. Verbundmaterial, das 10 bis 95 Vol.-% Aerogel-Partikel und mindestens ein anorganisches Matrixmaterial enthält, wobei der Teilchendurchmesser der Aerogel-Partikel kleiner als 0,5 mm ist und die Aerogel-Partikel als hydrophobe Oberflächengruppen trisubstituierte Silylgruppen aufweisen, wobei das anorganische Matrixmaterial ein Schichtsilikat ist und wobei das Verbundmaterial noch bis zu 50 Gew.-% anorganische Bindemittel, bezogen auf den Anteil Schichtsilikat, enthalten kann.

2. Verbundmaterial gemäß Anspruch 1, dadurch gekennzeichnet, daß das Schichtsilikat ein natürlich vorkommendes Schichtsilikat ist.

3. Verbundmaterial gemäß Anspruch 1 oder 2, wobei das Verbundmaterial als anorganisches Bindemittel Zement, Kalk und/oder Gips enthält.

4. Verbundmaterial gemäß mindestens einem der Ansprüche 1 bis 3, wobei das Aerogel ein SiO₂-Aerogel ist.

5. Verbundmaterial gemäß mindestens einem der Ansprüche 1 bis 4, wobei der Teilchendurchmesser der Aerogel-Partikel kleiner als 0,2 mm ist.

6. Verbundmaterial gemäß mindestens einem der Ansprüche 1 bis 5, wobei die Aerogel-Partikel Porositäten über 60 % und Dichten unter 0,6 g/cm³ aufweisen.

7. Verbundmaterial gemäß mindestens einem der Ansprüche 1 bis 6, wobei das Verbundmaterial 0,1 bis 30 Vol.-% Fasern enthält.

8. Verbundmaterial gemäß mindestens einem der Ansprüche 1 bis 7, wobei das Verbundmaterial zusätzlich noch Hilfsmittel enthält.

9. Verbundmaterial gemäß mindestens einem der Ansprüche 1 bis 8, wobei es eine flächige Form aufweist und auf mindestens einer Seite mit mindestens einer Deckschicht kaschiert ist.

10. Verfahren zur Herstellung eine Verbundmaterials gemäß Anspruch 1, wobei man
a) die Aerogel-Partikel, das Schichtsilikat, das Wasser sowie gegebenenfalls Fasern, Binde- und/oder Hilfsmittel in einer Mischvorrichtung mischt,
b) die erhaltene Mischung einer Formgebung unterwirft,
c) die erhaltene Form trocknet,
d) die getrocknete Form gegebenenfalls einer Weißbearbeitung unterzieht, und
e) die bearbeitete bzw. getrocknete Form gegebenenfalls einer Wärmebehandlung bei einer Temperatur im Bereich von 250 bis 1200° C unterwirft.

11. Verfahren gemäß Anspruch 10, wobei man die Formgebung mittels eines Extrusionsprozesses durchführt.

12. Verfahren gemäß Anspruch 10 oder 11, wobei man die Temperaturbehandlung bei einer Temperatur im Bereich von 500 bis 1000° C durchführt.

13. Verwendung eines Verbundmaterials gemäß mindestens einem der Ansprüche 1 bis 9 zur Wärmedämmung und/oder in der Elektronik.

## Claims (Claims for the following Contracting State(s): AT, CH, LI, DK, ES, GR, IE, LU, PT)

1. A composite material comprising from 10 to 95% by volume of aerogel particles and at least one inorganic matrix material, wherein the particle diameter of the aerogel particles is less than 0.5 mm and the inorganic matrix material is a phyllosilicate.

2. A composite material as claimed in claim 1, wherein the phyllosilicate is a naturally occurring phyllosilicate.

3. A composite material as claimed in claim 1 or 2, wherein the composite material contains cement, lime and/or gypsum.

4. A composite material as claimed in at least one of claims 1 to 3, wherein the aerogel is an SiO₂ aerogel.

5. A composite material as claimed in at least one of claims 1 to 4, wherein the aerogel particles have hydrophobic surface groups.

6. A composite material as claimed in at least one of claims 1 to 5, wherein the particle diameter of the aerogel particles is less than 0.2 mm.

7. A composite material as claimed in at least one of claims 1 to 6, wherein the aerogel particles have porosities greater than 60% and densities less than 0.6 g/cm³.

8. A composite material as claimed in at least one of claims 1 to 7, wherein the composite material comprises from 0.1 to 30% by volume of fibers.

9. A composite material as claimed in at least one of claims 1 to 8, wherein the composite material also contains auxiliary materials.

10. A composite material as claimed in at least one of claims 1 to 9, wherein the composite material has a sheet-like shape and is laminated, on at least one side, with at least one covering layer.

11. A process for producing a composite material as claimed in claim 1, which comprises
a) mixing the aerogel particles, the phyllosilicate, the water and, if desired, fibers, binders and/or auxiliary materials in a mixing device,
b) subjecting the mixture obtained to a shaping process,
c) drying the body obtained,
d) if desired, subjecting the dried body to green machining, and
e) if desired, subjecting the machined and/or dried body to a heat treatment at a temperature in the range from 250 to 1200°C.

12. The process as claimed in claim 11, wherein the shaping is carried. out by extrusion.

13. The process as claimed in claim 11 or 12, wherein the heat treatment is carried out at a temperature in the range from 500 to 1000°C.

14. The use of a composite material as claimed in at least one of claims 1 to 10 for heat insulation and/or in the electronics sector.

## Claims (Claims for the following Contracting State(s): BE, DE, FR, GB, IT, NL, SE)

1. A composite material comprising from 10 to 95% by volume of aerogel particles and at least one inorganic matrix material, where the particle diameter of the aerogel particles is less than 0.5 mm and the aerogel particles have trisubstituted silyl groups as hydrophobic surface groups, where the inorganic matrix material is a phyllosilicate and where the composite material may also comprise up to 50% by weight of inorganic binders, based on the proportion of phyllosilicate.

2. A composite material as claimed in claim 1, where the phyllosilicate is a naturally occurring phyllosilicate.

3. A composite material as claimed in claim 1 or 2, where the composite material contains cement, lime and/or gypsum as inorganic binder.

4. A composite material as claimed in at least one of claims 1 to 3, where the aerogel is an SiO₂ aerogel.

5. A composite material as claimed in at least one of claims 1 to 4, where the particle diameter of the aerogel particles is less than 0.2 mm.

6. A composite material as claimed in at least one of claims 1 to 5, where the aerogel particles have porosities greater than 60% and densities less than 0.6 g/cm³.

7. A composite material as claimed in at least one of claims 1 to 6, where the composite material comprises from 0.1 to 30% by volume of fibers.

8. A composite material as claimed in at least one of claims 1 to 7, where the composite material also contains auxiliary materials.

9. A composite material as claimed in at least one of claims 1 to 8, where the composite material has a sheet-like shape and is laminated, on at least one side, with at least one covering layer.

10. A process for producing a composite material as claimed in claim 1, where
a) the aerogel particles, the phyllosilicate, the water and, if desired, fibers, binders and/or auxiliary materials are mixed in a mixing device,
b) the mixture obtained is subjected to a shaping process,
c) the body obtained is dried,
d) if desired, the dried body is subjected to green machining, and
e) if desired, the machined and/or dried body is subjected to a heat treatment at a temperature in the range from 250 to 1200°C.

11. The process as claimed in claim 10, where the shaping is carried out by extrusion.

12. The process as claimed in claim 10 or 11, where the heat treatment is carried out at a temperature in the range from 500 to 1000°C.

13. The use of a composite material as claimed in at least one of claims 1 to 9 for heat insulation and/or in the electronics sector.

## Revendications (Revendications pour l'(les) Etat(s) contractant(s) suivant(s): AT, CH, LI, DK, ES, GR, IE, LU, PT)

1. Matériau composite, qui contient 10 à 95 % en volume de particules d'aérogel et au moins une matière de matrice inorganique, caractérisé en ce que le diamètre des particules d'aérogel est inférieur à 0,5 mm et en ce que la matière de matrice inorganique est un silicate lamellaire.

2. Matériau composite suivant la revendication 1, caractérisé en ce que le silicate lamellaire est un silicate lamellaire existant dans la nature.

3. Matériau composite suivant l'une des revendications 1 et 2, caractérisé en ce que le matériau composite contient du ciment, de la chaux et/ou du gypse.

4. Matériau composite suivant au moins l'une des revendications 1 à 3, caractérisé en ce que l'aérogel est un aérogel à base de SiO₂.

5. Matériau composite suivant au moins l'une des revendications 1 à 4, caractérisé en ce que les particules d'aérogel présentent des groupes superficiels hydrophobes.

6. Matériau composite suivant au moins l'une des revendications 1 à 5, caractérisé en ce que le diamètre des particules d'aérogel est inférieur à 0,2 mm.

7. Matériau composite suivant au moins l'une des revendications 1 à 6, caractérisé en ce que les particules d'aérogel présentent des porosités supérieures à 60 % et des densités inférieures à 0,6 g/cm³.

8. Matériau composite suivant au moins l'une des revendications 1 à 7, caractérisé en ce que le matériau composite contient 0,1 à 30 % en volume de fibres.

9. Matériau composite suivant au moins l'une des revendications 1 à 8, caractérisé en ce que le matériau composite contient encore en supplément des adjuvants.

10. Matériau composite suivant au moins l'une des revendications 1 à 9, caractérisé en ce qu'il présente une forme plate et en ce que, sur au moins une face, il est doublé d'au moins une couche de recouvrement.

11. Procédé de préparation d'un matériau composite suivant la revendication 1, caractérisé en ce que
a) on mélange les particules d'aérogel, le silicate lamellaire, l'eau ainsi qu'éventuellement des fibres, des liants et/ou des adjuvants dans un dispositif de mélange,
b) on soumet le mélange obtenu à une mise en forme,
c) on sèche la forme obtenue,
d) on soumet éventuellement la forme séchée à un usinage blanc, et
e) on soumet éventuellement la forme usinée et respectivement séchée à un traitement thermique à une température de l'ordre de 250 à 1200°C.

12. Procédé suivant la revendication 11, caractérisé en ce qu'on effectue la mise en forme au moyen d'un processus d'extrusion.

13. Procédé suivant l'une des revendications 11 et 12, caractérisé en ce qu'on effectue le traitement thermique à une température de l'ordre de 500 à 1000°C.

14. Utilisation d'un matériau composite suivant au moins l'une des revendications 1 à 10 pour l'isolation thermique et/ou dans l'électronique.

## Revendications (Revendications pour l'(les) Etat(s) contractant(s) suivant(s): BE, DE, FR, GB, IT, NL, SE)

1. Matériau composite, qui contient 10 à 95 % en volume de particules d'aérogel et au moins une matière de matrice inorganique, dans lequel le diamètre des particules d'aérogel est inférieur à 0,5 mm et les particules d'aérogel présentent des groupes silyle trisubstitués comme groupes superficiels hydrophobes, la matière de matrice inorganique étant un silicate lamellaire et le matériau composite pouvant encore contenir jusqu'à 50 % en poids de liant inorganique, par rapport à la fraction de silicate lamellaire.

2. Matériau composite suivant la revendication 1, caractérisé en ce que le silicate lamellaire est un silicate lamellaire apparaissant dans la nature.

3. Matériau composite suivant l'une des revendications 1 et 2, dans lequel le matériau composite contient, comme liant inorganique, du ciment, de la chaux et/ou du gypse.

4. Matériau composite suivant au moins l'une des revendications 1 à 3, dans lequel l'aérogel est un aérogel à base de SiO₂.

5. Matériau composite suivant au moins l'une des revendications 1 à 4, dans lequel le diamètre des particules d'aérogel est inférieur à 0,2 mm.

6. Matériau composite suivant au moins l'une des revendications 1 à 5, dans lequel les particules d'aérogel présentent des porosités supérieures à 60 % et des densités inférieures à 0,6 g/cm³.

7. Matériau composite suivant au moins l'une des revendications 1 à 6, dans lequel le matériau composite contient 0,1 à 30 % en volume de fibres.

8. Matériau composite suivant au moins l'une des revendications 1 à 7, dans lequel le matériau composite contient encore en supplément des adjuvants.

9. Matériau composite suivant au moins l'une des revendications 1 à 8, dans lequel il présente une forme plate et est, sur au moins une face, doublé d'au moins une couche de recouvrement.

10. Procédé de préparation d'un matériau composite suivant la revendication 1, dans lequel
a) on mélange les particules d'aérogel, le silicate lamellaire, l'eau ainsi qu'éventuellement des fibres, des liants et/ou des adjuvants dans un dispositif de mélange,
b) on soumet le mélange obtenu à une mise en forme,
c) on sèche la forme obtenue,
d) on soumet éventuellement la forme séchée à un usinage blanc, et
e) on soumet éventuellement la forme usinée et respectivement séchée à un traitement thermique à une température de l'ordre de 250 à 1200°C.

11. Procédé suivant la revendication 10, dans lequel on effectue la mise en forme au moyen d'un processus d'extrusion.

12. Procédé suivant l'une des revendications 10 et 11, dans lequel on effectue le traitement thermique à une température de l'ordre de 500 à 1000°C.

13. Utilisation d'un matériau composite suivant au moins l'une des revendications 1 à 9 pour l'isolation thermique et/ou dans l'électronique.
